# EUROPEAN PATENT SPECIFICATION

(11) **EP 3 871 467 B1**
(45) Date of publication and mention of the grant of the patent: **04.10.2023**
(21) Application number: 19795672.5
(22) Date of filing: 25.10.2019
(51) Int. Cl.: H04W 76/27, H04W 36/00, H04W 36/04

(54) **METHODS AND NODES FOR PERFORMING A HANDOVER AT RESUME**
VERFAHREN UND KNOTEN ZUR DURCHFÜHRUNG EINES WEITERREICHENS BEI WIEDERAUFNAHME
PROCÉDÉS ET NOEUDS DE TRANSFERT INTERCELLULAIRE AU NIVEAU D'UNE REPRISE

(30) Priority: 25.10.2018 US 201862750340 P
(43) Date of publication of application: 01.09.2021
(73) Proprietor: Telefonaktiebolaget LM Ericsson (publ), 164 83 Stockholm (SE)
(72) Inventor: RUGELAND, Patrik, 117 58 Stockholm (SE); TEYEB, Oumer, 171 44 Solna (SE); DA SILVA, Icaro L. J., 170 77 Solna (SE)
(74) Representative: Ericsson
(86) International application number: PCT/IB2019/059188
(87) International publication number: WO 2020/084595

(56) References cited:
- US-A1- 2018 227 964
- "3rd Generation Partnership Project; Technical Specification Group Radio Access Network; NR; NR and NG-RAN Overall Description; Stage 2 (Release 15)", 3GPP STANDARD; TECHNICAL SPECIFICATION; 3GPP TS 38.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.3.1, 7 October 2018 (2018-10-07), pages 1-92, XP051487627, [retrieved on 2018-10-07]
- MEDIATEK INC: "Required Procedures to Support Basic Handover", 3GPP DRAFT; R2-1804615, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Sanya, China; 20180416 - 20180420 14 April 2018 (2018-04-14), XP051428332, Retrieved from the Internet: URL:http://www.3gpp.org/ftp/Meetings%5F3GP P%5FSYNC/RAN2/Docs/ [retrieved on 2018-04-14]
- ERICSSON: "RRC procedures for inter-RAT mobility from NR to E-UTRA", 3GPP DRAFT; R2-1802643 RRC PROCEDURES FOR INTER-RAT MOBILITY FROM NR TO E-UTRA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG2, no. Athens, Greece; 20180226 - 20180302 15 February 2018 (2018-02-15), XP051399546, Retrieved from the Internet: URL:http://www.3gpp.org/ftp/tsg%5Fran/WG2% 5FRL2/TSGR2%5F101/Docs/ [retrieved on 2018-02-15]
- INTERDIGITAL INC (RAPPORTEUR): "Summary of [103#56][NR-U] Connected Mode Mobility (InterDigital)", 3GPP DRAFT; R2-1814024 (R15 NRU SI AI 11222 103NR56), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Chengdu, China; 20181008 - 20181012 3 October 2018 (2018-10-03), XP051523485, Retrieved from the Internet: URL:http://www.3gpp.org/ftp/tsg%5Fran/WG2% 5FRL2/TSGR2%5F103bis/Docs/R2%2D1814024%2Ez ip [retrieved on 2018-10-03]

## Description

### TECHNICAL FIELD

The present description generally relates to wireless communications and, more particularly, to resume a connection for a wireless device.

### BACKGROUND

### Inter-Radio Access Technology (RAT) and Inter Fifth Generation Core network (5GC) inworking in Long Term Evolution (LTE) and New Radio (NR)

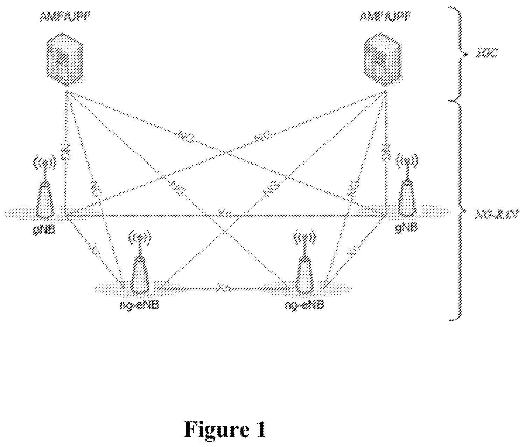

Fifth Generation (5G) in Third Generation Partnership Project (3GPP) introduces both a new core network (5GC) and a new Radio Access Network (NR). The core network, 5GC, will however, also support other Radio Access Technologies (RATs) than NR. It has been agreed that LTE (or Evolved-UMTS Terrestrial Radio Access (E-UTRA)) should also be connected to 5GC. LTE base stations (eNBs) that are connected to 5GC is called ng-eNB and is part of New Generation Radio Access Network (NG-RAN), which also consists of NR base stations called gNBs. Figure 1 shows how the base stations are connected to each other and the other nodes in 5GC. More specifically, Figure 1 shows a 5G System (5GS) Architecture containing 5GC and NG-RAN.

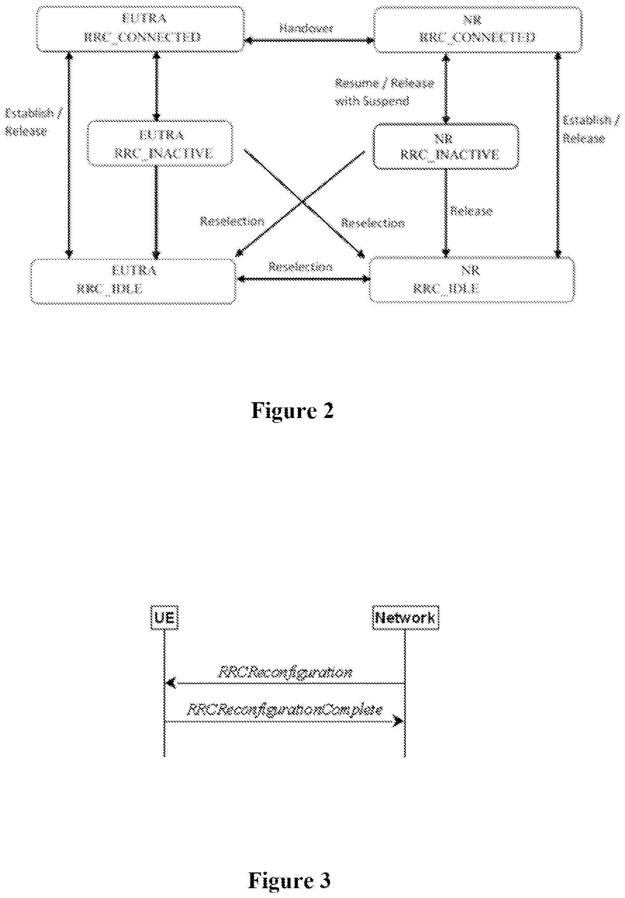

The state transitions that are currently supported in the LTE (E-UTRA) connected to the 5GC system and in the NR system are shown in Figure 2. Indeed, Figure 2 illustrates the User Equipment (UE) state machine and state transitions between NR/5GC, E-UTRA/Evolved Packet Core (EPC) and E-UTRA/5GC.

As can be seen in Figure 2, it is possible to move an ongoing User Equipment (UE) connection (the UE is in RRC_CONNECTED) between two RATs using a handover procedure. Additionally (not shown), it is possible for the network to move the UE to the other RAT by sending a Release message with re-direct information. When the UE is in an IDLE or INACTIVE state, the cell reselection procedure will be used, when transiting between the RATs. Within the RATs, there is also a Radio Resource Control (RRC) Re-establishment procedure which can be triggered, if the UE loses the radio connection (Radio Link Failure) or at intra or inter-RAT handover failure.

In NR and E-UTRA (i.e. LTE connected to 5GC), a new RRC state called RRC_INACTIVE has been introduced. In the context of the disclosure, NG-RAN refers to either NR or LTE connected to 5G Core (5GC) network.

In RRC_INACTIVE, the UE stores certain configurations, e.g. Data Radio Bearer (DRB) configurations and physical layers parameters. When the UE needs to resume the connection, it transmits a *RRCConnectionResumeRequest* or *RRCResumeRequest* in LTE and NR respectively. The UE can then reuse the stored settings and reduce the time and signaling needed to enter RRC_CONNECTED.

It should be noted that, in NR, an equivalent message exists for the case of long I-Radio Network Temporary Identifier (I-RNTI) of 40 bits used as UE identifier in *RRCResumeRequest1*, associated with a different logical channel compared to the short I-RNTI used in the *RRCResumeRequest* message.

In Release-15 (first release) of the NG-RAN standard, it has been agreed to not support direct transition between RRC_INACTIVE in LTE/E-UTRA and RRC_INACTIVE in NR. Hence, a Release-15 UE in RRC_INACTIVE in one RAT performing cell reselection to the other RAT would trigger the UE to release its Access Stratum (AS) context, enter RRC_IDLE and perform a Registration Area Update.

### RRC Reconfiguration

The *RRC Reconfiguration* message is used when a UE is in RRC_CONNECTED and the network decides that the UE should change its configurations, e.g. adding/modifying/releasing radio bearers, adding/changing measurement configurations, adding/modifying/releasing a secondary node or perform handover to another node. Figure 3 illustrates the signalling between the UE and the network for changing UE's configurations. For example, the network sends a RRC reconfiguration message to the UE. Once the UE has changed its configuration, it sends a *RRCReconfigurationComplete* message to the network.

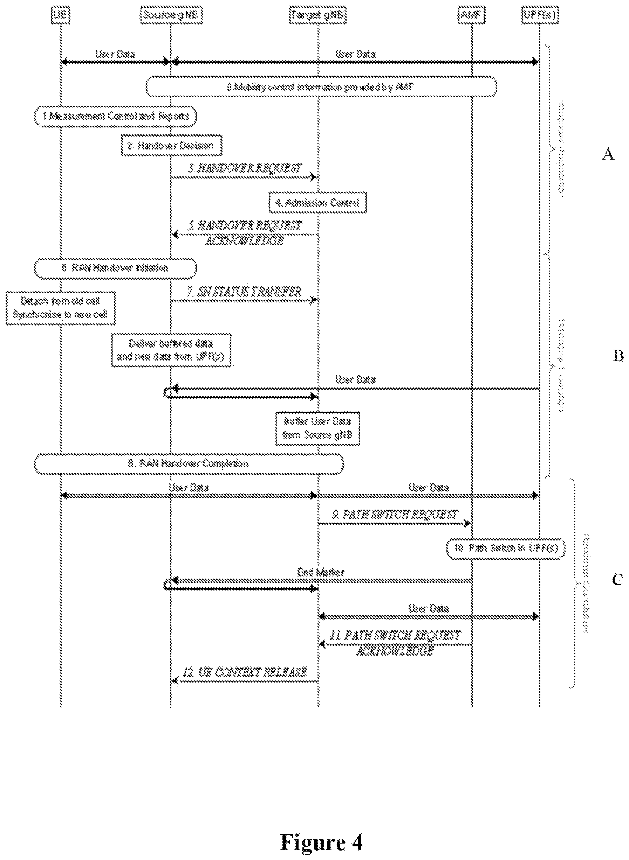

In case of inter-node handover, the source and target nodes will be different as can be seen in Figure 4. For example, Figure 4 shows an Intra-MAF/User Plane Function (UPF) Handover (TS 38.300). In Figure 4, A corresponds to the handover preparation, B corresponds to the handover execution and C corresponds to the handover Completion.

The RAN Handover Initiation and the RAN Handover Completion are the *RRCReconfiguration* and the *RRCReconfigurationComplete* messages.

### Inter-RAT handover

In legacy E-UTRA, it was possible to perform inter-RAT handover to GSM Edge Radio Access Network (GERAN)/UTRAN or Code Division Multiplex Access (CDMA). This was performed by transmitting a *MobilityFromEUTRACommand* containing a reconfiguration message applicable to the target RAT.

In Rel-15, this procedure was extended to allow an inter-RAT handover from E-UTRA to NR, as well as an inter-system handover between E-UTRA/EPC and E-UTRA/5GC, where the *MobiltiyFromEUTRACommand* contains the *RRCReconfiguration* message (if the target is NR) or *RRCConnectionReconfiguration* message (if the target is E-UTRA). In addition, a similar procedure was introduced in NR to allow a handover from NR to E-UTRA/EPC or E-UTRA/5GC using the *MobilityFromNRCommand* which contains the E-UTRA *RRCConnectionReconfiguration* message.

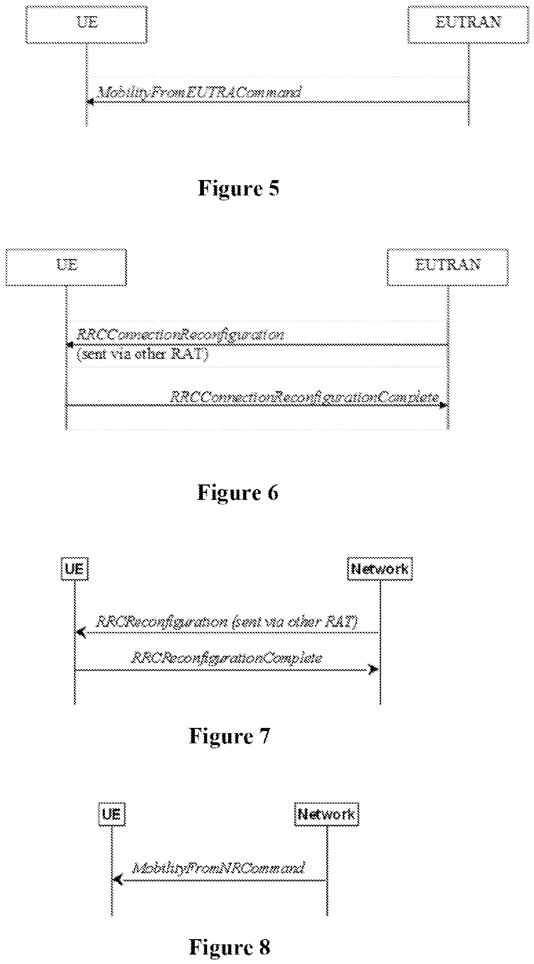

If a UE hands over from E-UTRA/EPC to E-UTRA/5GC or hands over from E-UTRA/5GC to E-UTRA/EPC, it would receive the *MobilityFromEUTRACommand* (as seen in Figure 5) containing the *RRCConnectionReconfiguration* (as can be seen in Figure 6).

If a UE hands over from E-UTRA/EPC to NR or hands over from E-UTRA/5GC to NR, it would receive the *MobilityFromEUTRACommand* (as seen in Figure 5) containing the *RRCReconfiguration* (as can be seen in Figure 7).

If a UE hands over from NR to E-UTRA/EPC or hands over from NR to E-UTRA/5GC, it would receive the *MobilityFromNRCommand* (as seen in Figure 8) containing the *RRCConnectionReconfiguration* (as can be seen in Figure 6).

For the mobility messages, the *MobilityFromEUTRACommand* message is defined in 3GPP TS 36.331, and the *MobilityFromNRCommand* message is defined in 3GPP TS 38.331.

### RRC Resume

When a UE is suspended from RRC_CONNECTED to RRC_INACTIVE, it suspends all communications, but maintains its configuration to be able to more rapidly resume the connection when needed.

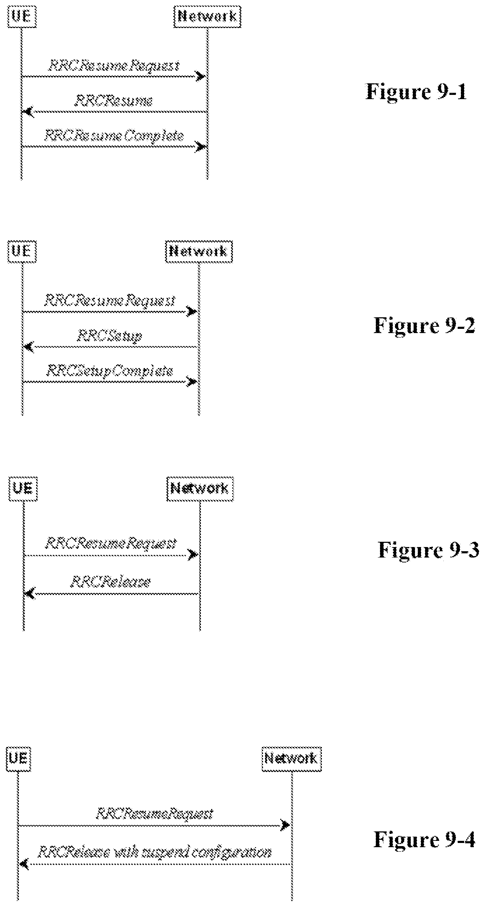

When the UE resumes in NR, it transmits a Resume request message (*RRCResumeRequest* or *RRCResumeRequest1*) and the network can reply with a RRCResume message. The UE then responds with a *RRCResumeComple* message and the UE enters RRC_CONNECTED (see Figure 9-1).

The *RRCResumeRequest* message (which could either be *RRCResumeRequest* or *RRCResumeRequest1*) contains a UE identifier and a resume cause so that the network can locate the UEs stored Access Stratum (AS) context and provide appropriate response depending on the resume cause (e.g. location updates using 'mo-signaling' or 'ma-Update', starting a data session using 'mo-data' or 'mt-data', or an emergency call, etc.). To prevent a rogue user to impersonate the UE, the resume request also contains a shortened Message Authentication Code- Integrity (MAC-I), a security token, which verifies the UE identity.

The *RRCResume* message contains the configurations the UE needs to enter RRC_CONNECTED, namely the *RadioBearerConfig,* containing the Packet Data Convergence Protocol (PDCP) and Service Data Application Protocol (SDAP) configurations, the *masterCellGroup,* containing the Media Access Control (MAC), Radio Link Control (RLC) and Physical (PHY) layer configurations, as well as the measurement configurations (*measConfig*). In addition, the *RRCResume* message may contain a `full configuration' flag, which will indicate to the UE that it shall release all its stored configurations and apply the new received configurations.

The *RRCResumeComplete* message may contain e.g. Non-Access Stratum (NAS) messages, a selected Public Land Mobile Network (PLMN) identity, and Transmit (Tx) Direct Current locations for the configured serving cells and Bandwidth Parts (BWPs).

The network can also respond differently than resuming the connection. For example, if it was not possible to retrieve the UE context from the source node (e.g. the target node doesn't have an Xn interface with the source node) or the network was not able to verify the UE identity from the supplied UE identity and short MAC-I in the resume request, the network may respond to the UE with an RRC setup message (Figure 9-2) to restart the UE connection and setup Signal Radio Bearer 1 (SRB)1 (which will be followed by an *RRCReconfiguration* to setup SRB2 and the other DRBs).

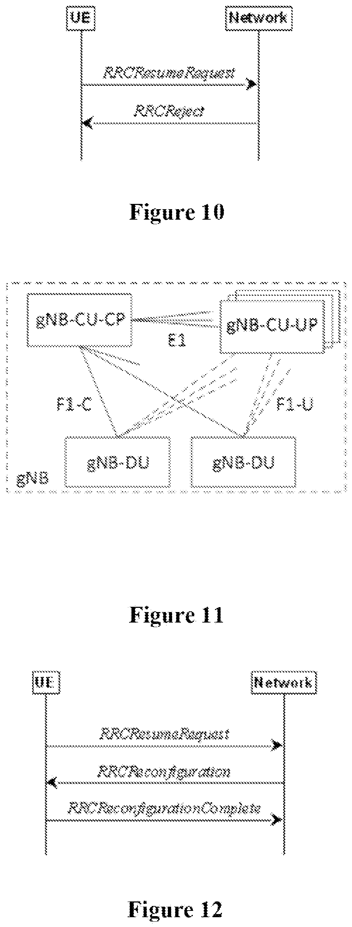

If the target cell is overloaded, the target node can respond to the *RRCResumeRequest* with an *RRCReject* message (see Figure 10) or an *RRCRelease* (see Figure 9-3, i.e. sending the UE to the IDLE mode, possibly with a redirection to another frequency layer or another RAT) or *RRCRelease* with suspend (see Figure 9-4, i.e. sending the UE back to the INACTIVE mode).

The different messages (e.g. RRC Resume request messages, such as the RRCResume message, RRCResumeComplete message, RRCReject message, RRCRelease message) are specified in 3GPP TS 38.331.

### Split architecture

The NG-RAN supports a separation of higher layer functions from lower layer functions in a central unit - distributed unit (CU-DU) split (TS 38.401 v15.3.0), as shown in Figure 11.
- A gNB may consist of a gNB-CU-Control Plane (CP), multiple gNB-CU-User Planes (UPs) and multiple gNB-DUs;
- A gNB may consist of a gNB-CU-CP, multiple gNB-CU-UPs and multiple gNB-DUs;
- The gNB-CU-CP is connected to the gNB-DU through the F1-C interface;
- The gNB-CU-UP is connected to the gNB-DU through the F1-U interface;
- The gNB-CU-UP is connected to the gNB-CU-CP through the E1 interface;
- One gNB-DU is connected to only one gNB-CU-CP;
- One gNB-CU-UP is connected to only one gNB-CU-CP;

As a note, for resiliency purposes, a gNB-DU and/or a gNB-CU-UP may be connected to multiple gNB-CU-CPs by appropriate implementation.
- One gNB-DU can be connected to multiple gNB-CU-UPs under the control of the same gNB-CU-CP;
- One gNB-CU-UP can be connected to multiple DUs under the control of the same gNB-CU-CP;

As a note, the connectivity between a gNB-CU-UP and a gNB-DU is established by the gNB-CU-CP using Bearer Context Management functions. The gNB-CU-CP selects the appropriate gNB-CU-UP(s) for the requested services for the UE.Data forwarding between gNB-CU-UPs during intra-gNB-CU-CP handover within a gNB may be supported by Xn-U.
Document US 2018/227964 A1 discloses a UE access method, including: a UE receiving information of supported type(s) of respective cell of a base station broadcasted by the respective cell, wherein the information of the supported type(s) of the respective cell comprises UE type(s) supported by the respective cell; and the UE comparing the type of the UE and the UE type(s) supported by the respective cell, and selecting a cell supporting the type of the UE and transmit an RRC connection setup request message to the selected cell, wherein the RRC connection setup request comprises the type of the UE.
3GPP standard TS 38.300, V15.3.1 specifies in section 9.2.2.4.1 that a UE can transition from RRC INACTIVE to RRC _CONNECTED. In a first step, the UE sends an RRCResumeRequest message to a gNB.

### SUMMARY

There may be some problems with the existing solutions. For example, in the current specifications, if the UE attempts to resume an RRC connection, it will select a cell with the best radio conditions based on configured thresholds and offsets and transmit the RRC Resume Request message to that node.

If the target node cannot admit the UE (e.g. the target node/cell is overloaded), the target node can send an *RRCReject* message with a timer during which the UE cannot retry the Resume procedure.

Alternatively, the target node can send a *RRCRelease* message with redirect, which will change the UE's frequency prioritization (e.g. favor a different frequency) before the UE goes back to RRC _INACTIVE or to RRC_IDLE and inform the NAS layer.

Alternatively, the target node may first move the UE to RRC _CONNECTED, i.e. send the UE to RRCResume, then wait for an *RRCResumeComplete* and then send an *RRCReconfiguration* to handover the UE to another cell/node that's possibly less loaded.

However, any of these alternatives will increase the latency before the UE can resume (especially, if the RRCRej ect was used and the UE keeps coming back to the same node/cell when the wait timer expires and ends up being rejected again and so on).

According to the present disclosure, methods, a wireless device, a network node and a computer program product according to the independent claims are provided. Developments are set forth in the dependent claims. Certain aspects and their embodiments of the present disclosure may provide solutions to the above-mentioned problems.

This summary is not an extensive overview of all contemplated embodiments and is not intended to identify key or critical aspects or features of any or all embodiments or to delineate the scope of any or all embodiments. In that sense, other aspects and features will become apparent to those ordinarily skilled in the art upon review of the following description of specific embodiments in conjunction with the accompanying figures.

### BRIEF DESCRIPTION OF THE DRAWINGS

Exemplary embodiments will be described in more detail with reference to the following figures, in which:
Figure 1 illustrates a schematic block diagram of a 5G system (5GS) architecture containing 5GC and NG-RAN.
Figure 2 is a schematic block diagram of UE state machine and state transitions between NR/5GC, E-UTRA/EPC and E-UTRA/5GC.
Figure 3 is a signaling diagram for RRC reconfiguration, successful (TS 38.331).
Figure 4 is a signaling diagram of Intra-AMF/UPF Handover (TS 38.300).
Figure 5 is a signaling diagram of Mobility from E-UTRA, successful.
Figure 6 is a signaling diagram of a Handover to E-UTRA, successful.
Figure 7 is a signaling diagram of a Handover to NR, successful.
Figure 8 is a signaling diagram of Mobility from NR, successful.
Figure 9-1 is a signaling diagram of RRC connection resume, successful.
Figure 9-2 is a signaling diagram of RRC connection resume fallback to RRC connection establishment, successful.
Figure 9-3 is a signaling diagram of RRC connection resume followed by network release, successful.
Figure 9-4 is a signaling diagram of RRC connection resume followed by network suspend, successful.
Figure 10 is a signaling diagram of RRC connection resume, network reject.
Figure 11 is a schematic diagram of an overall architecture for separation of gNB-CU-CP and gNB-CU-UP.
Figure 12 is a signaling diagram of RRC connection resume followed by RRC connection reconfiguration, successful, according to an embodiment.
Figure 13 illustrates a signaling diagram of NR RRC connection resume followed by inter-gNB RRC connection reconfiguration, successful, according to an embodiment.
Figure 14 illustrates a signaling diagram of LTE RRC connection resume followed by inter-eNB RRC connection reconfiguration, successful, according to an embodiment.
Figure 15 illustrates a signaling diagram of RRC connection resume followed by inter-RAT mobility from E-UTRA to NR, successful, according to an embodiment.
Figure 16 illustrates a signaling diagram of RRC connection resume followed by inter-RAT mobility from NR to E-UTRA, successful, according to an embodiment.
Figure 17 illustrates a schematic block diagram of a communication network.
Figure 18 illustrates a flow chart of a method in a network node, according to an embodiment.
Figure 19 illustrates a flow chart of a method in a wireless device, according to an embodiment.
Figures 20 and 21 illustrate a schematic block diagram of a network node.
Figures 22 and 23 illustrate a schematic block diagram of a wireless device.

### DETAILED DESCRIPTION

The embodiments set forth below represent information to enable those skilled in the art to practice the embodiments. Upon reading the following description in light of the accompanying figures, those skilled in the art will understand the concepts of the description and will recognize applications of these concepts not particularly addressed herein. It should be understood that these concepts and applications fall within the scope of the description.

In the following description, numerous specific details are set forth. However, it is understood that embodiments may be practiced without these specific details. In other instances, well-known circuits, structures, and techniques have not been shown in detail in order not to obscure the understanding of the description. Those of ordinary skill in the art, with the included description, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

As used herein, the singular forms "a", "an" and "the" are intended to include the plural forms as well, unless the context clearly indicates otherwise. It will be further understood that the terms "comprises," "comprising," "includes," and/or "including" when used herein, specify the presence of stated features, integers, steps, operations, elements, and/or components, but do not preclude the presence or addition of one or more other features, integers, steps, operations, elements, components, and/or groups thereof.

As mentioned above, when a UE attempts to resume in a target node/cell, if the target node/cell cannot admit the UE (e.g. it is overloaded), the current specifications only allow the node to send a *RRCReject* or *RRCRelease* message.

Generally stated, embodiments of the present disclosure provide a method for a UE to be directly handed over to a second cell upon the reception of a message (e.g. *RRCReconfiguration* or *RRCResume*) in response to an RRC Resume Request sent to a first cell. On the network side, the target node, upon the reception of the Resume Request like message may decide to perform a handover (reconfiguration with sync) to different types of cells and act upon depending on the type of cell:
- If the target node decides to handover to a second cell served by the target node, the target node retrieves the context associated with the I-RNTI indicated in the Resume Request and prepares a reconfiguration message for the second cell;
- If the target node decides to handover to a second cell served by a different node that is not the target node and not the source node where the UE AS context is, the target node performs the context fetching procedure with the source node indicated by the I-RNTI in the Resume Request, and starts a handover preparation procedure by providing to this different node the current RRC configuration of the UE according to the UE's stored context;
- If the target node decides to handover to a second cell served by a node that is actually the source node where the UE AS context is, the target node does not perform the context fetching procedure with the source node but indicates to that node a handover of its incoming UE;
- The decision to handover at the target node may be based on measurement reports during the resume procedure, e.g. multiplexed with RRC Resume Request. This means that the measurement report and the RRC Resume request are separate messages but sent together in the same Uplink (UL) grant, for example.

In one embodiment, the Resume message can contain an indication of a handover, e.g. reconfiguration with sync.

In another embodiment, the network sends an *RRCReconfiguration* message as response to the *RRCResumeRequest* message. This way, it will be possible to handover the UE to another cell without the need to await the NAS to trigger a new Resume or Setup procedure.

In yet another embodiment, the network responds with the Resume message multiplexed with an RRC reconfiguration message (i.e. the network doesn't have to wait for the UE's Resume complete message before it can send the reconfiguration). In such an embodiment, the UE may respond with both Resume complete and RRC reconfiguration complete messages (as in legacy), or it may need to respond to only one complete message (e.g. RRC Reconfiguration complete, which the network could interpret as a complete message for both the resume and reconfiguration).

Early measurement reports are being discussed in 3GPP (i.e. measurement reports that are sent shortly after or even multiplexed with the resume request, based on measurement configuration received when the UE gets suspended). If the network gets such an early measurement or if the UE had not been suspended for a long time and the last measurement it has received from it is relatively recent, the target node may be able to select a suitable target cell. However, even without a measurement, the target node can blindly configure the UE to another cell (i.e. without necessarily receiving measurements). The handover could be to another cell of the same target node, or to a cell belonging to another target node (based on early measurements, recent measurements or even blind configuration).

It should be noted that the methods described herein are applicable to intra-RAT handovers, where the RAT is NR, LTE or any RAT supporting resume procedures and handovers.

The methods are applicable to inter-RAT handovers, where the source RAT may be NR, LTE or any RAT supporting inter-RAT resume procedures and handovers and the target RAT is one of NR, LTE or any other RAT supporting resume procedures and handovers but different from the source RAT.

Though some embodiments and sub-embodiments are described by using the messages *RRCResumeRequest, RRCResume, RRCReconfiguration,* etc., which are messages in NR, the embodiments are equally applicable for the LTE case where the corresponding messages are *RRCConnectionResumeRequest, RRCConnectionResume, RRCConnectionReconfiguration,* etc.

The legacy behavior when a UE in *RRC*_*INACTIVE* resumes the connection is to transmit an RRC Resume Request message (*RRCConnectionResumeRequest* in E-UTRA and *RRCResumeRequest* or *RRCResumeRequest1* in NR) to the cell the UE is currently camping on. If the target cell is overloaded, the network would respond with an *RRCReject* including a wait timer set to values between 1 and 16 seconds or an *RRCRelease* with redirect with or without suspend configurations.

For the *RRCReject,* the delay introduced to the UE is obvious, i.e. the configured waittimer which could be several seconds while for the *RRCRelease* with redirect the delay will be a bit shorter, but still would require the NAS layer to trigger a new RRC Resume procedure, and the UE must acquire the system information of the new target cell.

Instead, if the network could respond to the *RRC Resume Request* message with an RRC Reconfiguration message, or if it can multiplex an RRC reconfiguration message with the Resume message, or if it can include information in the Resume message that can enable handover (e.g. reconfiguration with sync), the UE could receive all configurations needed to access the new target cell.

It should be noted that in this disclosure the terms "source node (or node)" and "source cell (or cell)" can be used interchangeably in the context of a handover. In the same manner, the terms "target node" and "target cell" can be used interchangeably in the context of a handover.

### Methods based on sending RRC reconfiguration message in response to Resume Request

### 1) Combined Resume and intra-RAT Handover (HO)

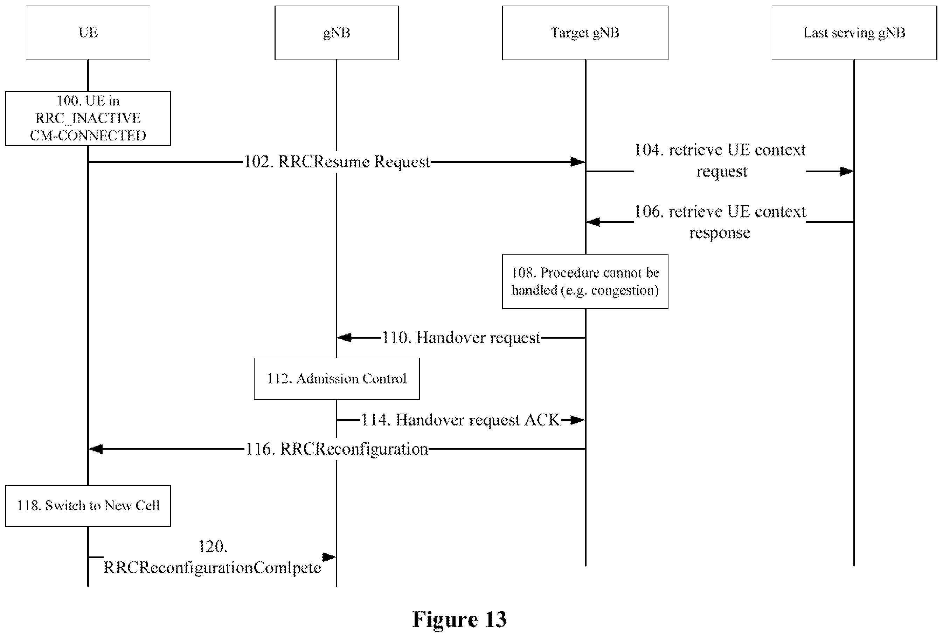

Figure 12 illustrates a signaling diagram of a RRC connection resume followed by a RRC connection reconfiguration, in the successful scenario. Figure 13 illustrates a signaling diagram of a NR RRC connection resume followed by inter-gNB RRC connection reconfiguration, in the successful case.

Turning to Figure 13, in step 100, the UE gets suspended to RRC_INACTIVE in an NR cell, and it triggers an RRC Resume procedure (step 102) due to the arrival of an UpLink (UL) data or on receiving a paging request from the network to send Downlink (DL) data to the UE, for example. The node (e.g. the target gNB) receiving the *RRCResumeRequest* message may decide that the cell which the UE attempts to access is unsuitable, e.g. due to congestion. In such a case, the target node could decide to hand over the UE to another node/cell (e.g. a cell which is less congested).

Upon reception of the *RRCResumeRequest* message (which may be an *RRCResumeRequest* or *RRCResumeRequest1*, depending whether a long or short I-RNTI is being used) the target node would request the UE context from the Last serving node based on the UE identity provided in the RRC Resume Request message (step 104). When the target node receives the RETRIEVE UE CONTEXT RESPONSE from the Last serving node (step 106), for example, if it is not able to serve the UE (e.g. congestion) (step 108), it can decide that the UE should be handed over to another cell/node. This decision could be based on e.g. early measurements (not yet supported/specified in 3GPP) or based on recent and still relevant measurements (e.g. for a stationary UE which recently was suspended to RRC_INACTIVE) or based on blind configurations (i.e. not based on measurements).

The target node then transmits a HANDOVER REQUEST message (step 110) to a candidate node (e.g. gNB), which, if capable of accepting the UE (step 112), responds with a HANDOVER REQUEST ACKNOWLEDGEMENT (ACK) with all configurations required for the UE, possibly including SIB1 (step 114). The target node (receiving the *RRCResumeRequest* message) then transmits the *RRCReconfiguration* message to the UE (step 116). Upon receipt of the RRCReconfiguration message the UE reselects/switches to the new node (gNB) for a connection (step 118). Then, the UE transmits the *RRCReconfigurationComplete* message to the new node (step 120). In another example, the target node, in response to receiving the *RRCResumeRequest* message, can transmit a *RRCResume* message, including a handover indication, such as *ReconfigWithSync,* to the UE (step 116). Then, the UE can transmit a RRCResumeComplete message to the new node, in step 120. The *RRCReconfiguration* message may contain reconfigurations so that the UE can connect to the new node. It should be noted that the target node will send a message back to the UE in response to the RRCResume request message. This message can be the RRCReconfiguration message, an extended version of the RRCResume message, or some other message or a new message.

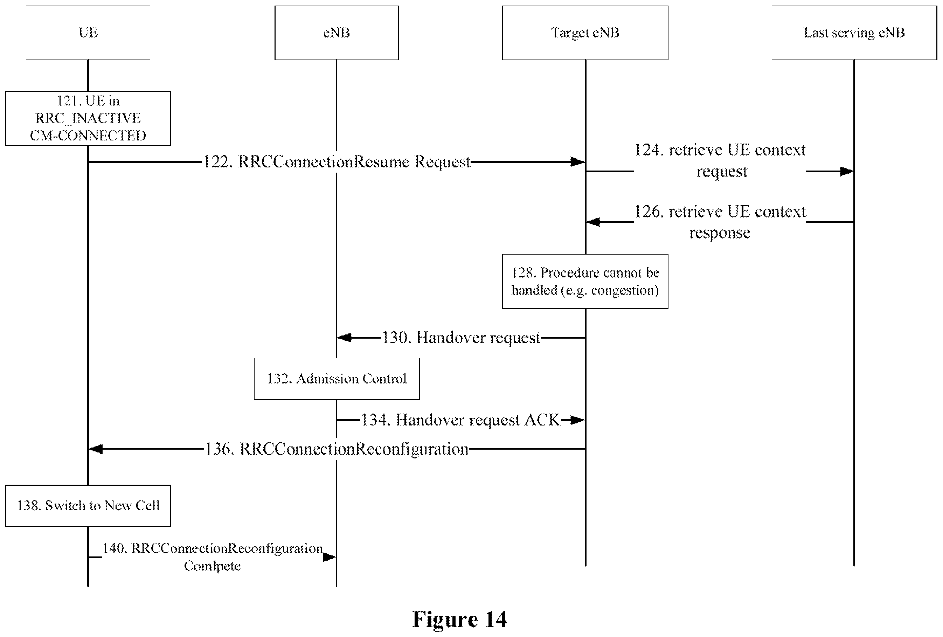

This example is equally applicable to the case of LTE, which is shown in Figure 14. Figure 14 illustrates the same steps as in Figure 13. However, the nodes are referred to as eNBs instead of gNBs. Furthermore, the messages are changed to *RRCConnectionResumeRequest, RRCConnectionReconfiguration* and *RRCConnnectionReconfigurationComplete.* In another example, the UE can send a *RRCConnectionResume Complete* to the new node, instead of *RRCConnnectionReconfigurationComplete.*

It should be noted that in these examples (e.g. Figures 13 and 14), the Last Serving node belongs to the same RAT as the target node. However, the embodiments are not limited to such a case. They are equally applicable if the target node and last serving node belong to different RATs.

The UE, upon the reception of the command to handover (e.g. to another cell) after transmitting an RRC Resume Request, performs a set of actions. One of the actions is the stopping of the resume failure detection timer T319; otherwise, if after the handover, the UE keeps running that timer, a NAS recovery may be triggered unnecessarily. Notice that timer T304 is started in that case, while timer T319 is stopped.

Another set of actions relates to security. The UE expects an *RRCResume* or *RRCRelease* on SRB 1 that is encrypted and integrity protected according to new security keys, refreshed and derived based on the stored AS context. Then, the UE also expects the HO command (e.g. *RRCReconfiguration*) encrypted using the new keys in the cell the UE has resumed at.

When the UE receives the *RRC Reconfiguration* message, it could contain the Next hop Chaining Counter (NCC) which will indicate how the UE shall further update the security key and possibly security algorithms associated with the new target cell. The UE then uses this new key to cipher and integrity protect the RRC Reconfiguration Complete message.

Another set of actions upon receiving a HO command performed by the UE are the following:
- enter RRC_CONNECTED;
- discard the *fullI-RNTI, shortI-RNTI* and the stored UE AS context, except *ran-NotificationAreaInfo*;
- if stored, discard the cell reselection priority information provided by the *cellReselectionPriorities* or inherited from another RAT;
- stop timer T320, if running;
- indicate to upper layers that the suspended RRC connection has been resumed;
- indicate to upper layers that the suspended RRC connection has been resumed and handed over;
- stop the cell re-selection procedure;
- prepare an *RRCReconfigurationComplete* message to be transmitted to the new target node including:
   i. Selected PLMN in the previous target cell the UE tries to resume;
   ii. Selected PLMN in the new target cell.

### 2) Combined resume and Inter-RAT HO

In another example, the target node (eNB or gNB) decides that the UE should preferably handover to an inter-RAT node. The decision to do so could be based on the same reason as in the intra-RAT case (i.e. this decision could be based on e.g. early measurements or based on recent and still relevant measurements (e.g. for a stationary UE which recently was suspended to RRC_INACTIVE) or based on blind configurations (i.e. not based on measurements).

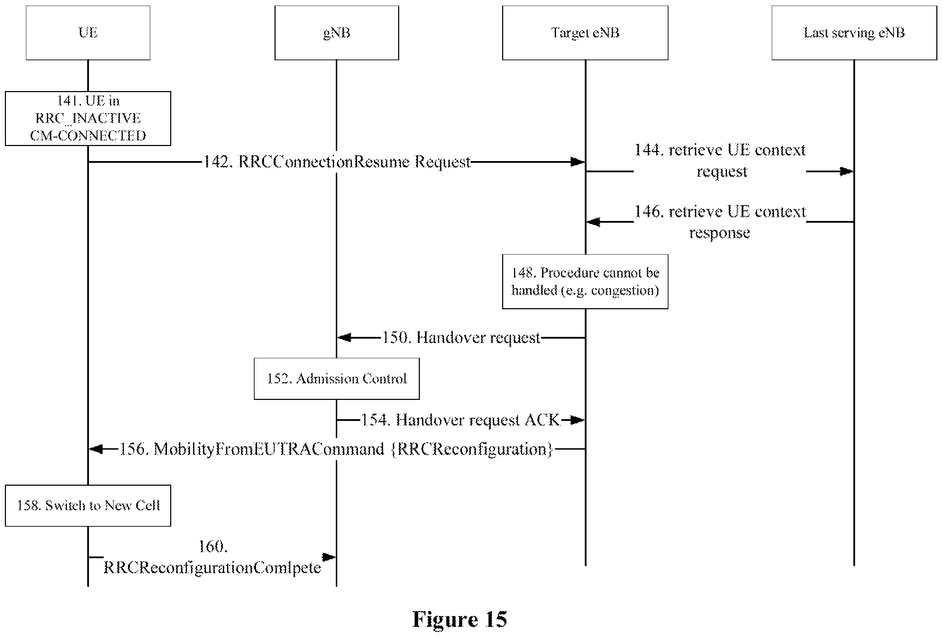

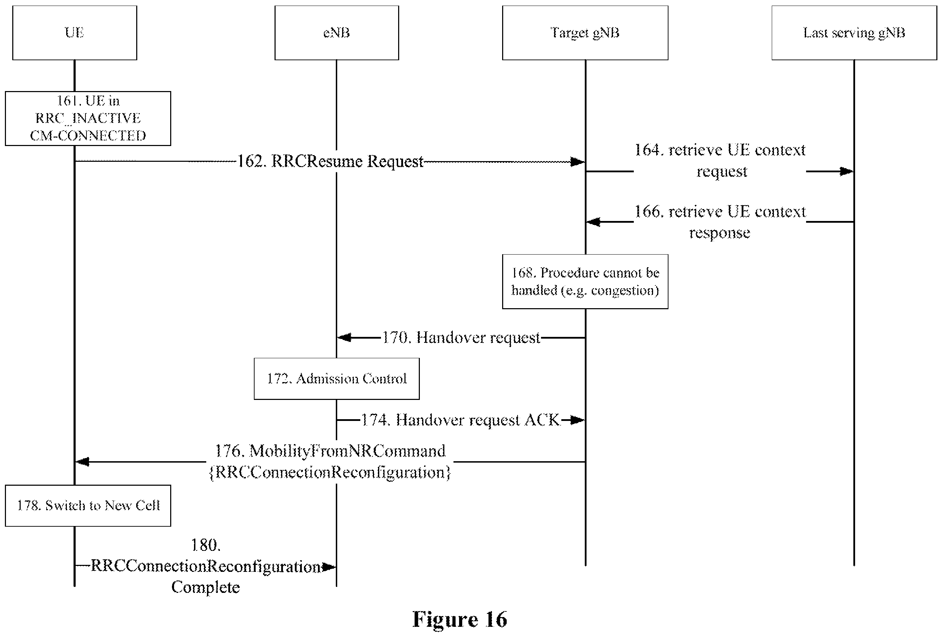

To achieve this, the target node instead sends a HANDOVER REQUEST to an inter-RAT node and sends a *MobilityFromXXCommand* (XX=NR or EUTRA) to the UE, which contains the inter-RAT RRC Reconfiguration message as can be seen in Figure 15 and Figure 16. For example, Figure 15 illustrates a signaling diagram of a RRC connection resume followed by inter-RAT mobility from E-UTRA to NR, in the successful scenario. As such, the target node is an eNB, the new node is a gNB and the last serving node is an eNB. In step 142 of Figure 15, the UE sends a message to the target eNB; the message is a RRCConnectionResume request, for example. In step 156, the target eNB sends a MobilityfromEUTRACommand{RRCReconfiguration} to the UE. In step 160, the UE sends a RRCReconfigurationComplete message to the new gNB.

Figure 16 illustrates a signaling diagram of a RRC connection resume followed by inter-RAT mobility from NR to E-UTRA, in the successful scenario. As such, the target node is an gNB, the new node is an eNB and the last serving node is an gNB. In step 162 of Figure 16, the UE sends a message to the target eNB; the message is a RRCResume request, for example. In step 176, the target gNB sends a MobilityfromNRCommand{RRCConnectionReconfiguration} to the UE. In step 180, the UE sends a RRCConnectionReconfigurationComplete message to the new eNB.

### Methods based on enhanced Resume message that can trigger handover

In one example, the UE performs a handover upon the reception of an *RRCResume* message (or *RRCReconfiguration* message) containing a handover command indication, like a *reconfigurationWithSync* field, in response to an RRC Resume Request like message.

NOTE: The discussion here is focused on the NR case. For the LTE, the embodiment still applies, but it will be the *mobilityControlInfo* Information Element (IE) that has to be used to trigger a handover upon resume.

For example, the *reconfigurationWithSync* field can be found in 3GPP TS 38.331. However, in the current systems, this field is only used inside the RRCReconfiguration message. In the embodiments of the disclosure, this field is included in the Resume message.

There are different alternatives on how the UE handles the procedure upon receiving the handover indication, e.g. *reconfigurationWithSync,* in the resume message. In general, as described above, the UE applies the configurations and considers them to be the ones to be used in the target cell. Then, after applying the configurations, the UE needs to prepare a response message.

In the current systems, upon sending an *RRCResumeRequest* (or *RRCResumeRequest1*) message in cell-A (for example), the UE receives in cell-A an *RRCResume* message and, after applying the configuration to be used in cell-A, the UE submits to lower layers for transmission in cell A an *RRCResumeComplete* message.

In order to enable a similar kind of functionality in the *RRCResume* as in the *RRCReconfiguration,* several IEs may need to be introduced in the *RRCResume* message, such as *dedicatedSIB1-Delivery, dedicatedSystemlnformationDelivery,* which are currently in *RRCReconfiguration* but not in *RRCResume.* In addition, any field which may be introduced to *RRCReconfiguration* or *ReconfigurationComplete* message may also be introduced in *RRCResume* and *RRCResumeComplete* message respectively.

### Responding to the RRCResume message with RRCReconfigurationComplete message

In one embodiment, upon sending an *RRCResumeRequest* (or *RRCResumeRequest1*) message in cell-A (a first cell), the UE receives in cell-A an *RRCResume* message with an indication to handover to cell B (a second cell). Then, the UE applies the configuration in the RRCResume message to be used in cell-B, which may be a new target cell different from cell A. If cell-B is a new cell, the UE needs to synchronize with it, i.e. perform a random access, and then the UE submits to lower layers for transmission in cell-B an *RRCReconfigurationComplete* message. Security wise, the UE performs a key refresh upon handover and keeps using these keys in the new target cell.

One possible implementation in the current RRC specifications (TS. 38.331) is shown below (where the new changes that are being proposed are underlined):

### 5.3.13.4 Reception of the RRCResume by the UE

The UE shall:
[...]
1> enter RRC_CONNECTED;
1 > indicate to upper layers that the suspended RRC connection has been resumed;
1> stop the cell re-selection procedure;
1> consider the current cell to be the PCell;
1 > if the *RRCResume* message includes the *dedicatedSIB1-Delivery*:
   2> perform the action upon reception of *SIB1* as specified in 5.2.2.4.2;
1 > if the *RRCResume* message includes the *dedicatedSystemInformationDelivery*:
   2> perform the action upon reception of System Information as specified in 5.2.2.4;
1> if *reconfigurationWithSync* was included in *spCellConfig* of an MCG:
   2> set the content of *RRCReconfigurationComplete* message as follows:
      3 > if the *RRCResume* includes the *masterCellGroup* containing the *reportUplinkTxDirectCurrent,* or;
      3 > if the *RRCResume* includes the *secondaryCellGroup* containing the *reportUplinkTxDirectCurrent:*
         4> include the *uplinkTxDirectCurrentList*;
   2> if *reconfigurationWithSync* was included in *spCellConfig* of an SCG or MCG:
      3> initiate the random access procedure on the SpCell, as specified in TS 38.321 [3];
      NOTE: The order the UE sends the *RRCReconfigurationComplete* message and performs the Random Access procedure towards the MCG/SCG is left to UE implementation.
   2> submit the *RRCReconfigurationComplete* message via SRB1 to lower layers for transmission using the new configuration;
   2> if *reconfigurationWithSync* was included in *spCellConfig* of an MCG or SCG, and when MAC of an NR cell group successfully completes a random access procedure;
      3> stop timer T304 for that cell group;
         4> apply the parts of the CQI reporting configuration, the scheduling request configuration and the sounding RS configuration that do not require the UE to know the SFN of the respective target SpCell, if any;
      3 > apply the parts of the measurement and the radio resource configuration that require the UE to know the SFN of the respective target SpCell (e.g. measurement gaps, periodic CQI reporting, scheduling request configuration, sounding RS configuration), if any, upon acquiring the SFN of that target SpCell;
      3 > if the *reconfigurationWithSync* was included in *spCellConfig* of an MCG:
         4> stop timer T390, if running, for all access categories;
         4> if *RRCResume* does not include *dedicatedSIB1-Delivery* and
         4> if the active downlink BWP, which is indicated by the *firstActiveDownlinkBWP-Id* for the target SpCell of the MCG, has a common search space configured by *searchSpaceSIB1*:
            5> acquire the *SIB1* of the target SpCell of the MCG, as specified in 5.2.2.3.1 which is scheduled as specified in TS 38.213 [13];
            5> upon acquiring *SIB1,* perform the actions specified in section 5.2.2.4.2.
   2> the procedure ends.
   NOTE: The UE is only required to acquire broadcasted *SIB1* if the UE can acquire it without disrupting unicast data reception, i.e. the broadcast and unicast beams are quasi colocated. [...]

### Responding to the RRCResume message with RRCResumeComplete message

In another example, upon sending an *RRCResumeRequest* (or *RRCResumeRequest1*) message in cell-A, the UE receives in cell-A an *RRCResume* message with an indication to handover to cell B. Then, the UE applies the configuration in the *RRCResume* message to be used in cell-B, which may be a new target cell different from cell A. If that is a new cell, the UE needs to synchronize with it, i.e. perform a random access, and then the UE submits to lower layers for transmission in cell B an *RRCResumeComplete* message. Security wise, the UE performs a key refresh upon handover and keeps using these keys in the new target node.

Changes in the 3GPP TS 38.331 specification are as follows (the changes are underlined):

### 5.3.13.4 Reception of the RRCResume by the UE

The UE shall:
[...]
1 > if stored, discard the cell reselection priority information provided by the *cellReselectionPriorities* or inherited from another RAT;
1 > stop timer T320, if running;
1> if the *RRCResume* message includes the *measConfig*:
   2> perform the measurement configuration procedure as specified in 5.5.2;
1 > if the *RRCRsume* message includes the *dedicatedSIB1-Delivery*:
   2> perform the action upon reception of *SIB1* as specified in 5.2.2.4.2;
1 > if the *RRCResume* message includes the *dedicatedSystemInformationDelivery*:
   2> perform the action upon reception of System Information as specified in 5.2.2.4;
1> resume measurements if suspended;
   Editor's Note: FFS Whether there is a need to define UE actions related to access control timers (equivalent to T302, T303, T305, T306, T308 in LTE). For example, informing upper layers if a given timer is not running.
1> enter RRC_CONNECTED;
1 > indicate to upper layers that the suspended RRC connection has been resumed;
1> stop the cell re-selection procedure;
1> consider the current cell to be the PCell;
1> set the content of the of *RRCResumeComplete* message as follows:
   2> if the upper layer provides NAS PDU, set the *dedicatedNAS-Message* to include the information received from upper layers;
   2> if the upper layer provides a PLMN, set the *selectedPLMN-Identity* to PLMN selected by upper layers (TS 24.501 [23]) from the PLMN(s) included in the *plmn-IdentityList* in *SIB1;*
   2> if the *masterCellGroup* contains the *reportUplinkTxDirectCurrent:*
      3 > include the uplinkTxDirectCurrentList;
   2> if the *RRCResume* includes the *masterCellGroup* containing the *reportUplinkTxDirectCurrent,* or;
   2> if the *RRCResume* includes the *secondaryCellGroup* containing the *reportUplinkTxDirectCurrent*:
      3 > include the *uplinkTxDirectCurrentList;*
   2> if *reconfigurationWithSync* was included in *spCellConfig* of an SCG or MCG:
      3> initiate the random access procedure on the SpCell, as specified in TS 38.321 [3];
   2> else:
      3> the procedure ends;
   NOTE: The order the UE sends the *RRCResumeComplete* message and performs the Random Access procedure towards the MCG/SCG is left to UE implementation.
1 > if *reconfigurationWithSync* was included in the *spCellConfig*:
   2> consider the phyCellId in the ServingCellConfigCommon to the current PCell;
1> submit the *RRCResumeComplete* message to lower layers for transmission in the current PCell;
1> if *reconfigurationWithSync* was included in *spCellConfig* of an MCG or SCG, and when MAC of an NR cell group successfully completes a random access procedure;
   2> stop timer T304 for that cell group;
   2> apply the parts of the COI reporting configuration, the scheduling request configuration and the sounding RS configuration that do not require the UE to know the SFN of the respective target SpCell, if any;
   2> apply the parts of the measurement and the radio resource configuration that require the UE to know the SFN of the respective target SpCell (e.g. measurement gaps, periodic CQI reporting, scheduling request configuration, sounding RS configuration), if any, upon acquiring the SFN of that target SpCell;
   2> if the *reconfigurationWithSync* was included in *spCellConfig* of an MCG:
      3> stop timer T390, if running, for all access categories;
      3> if *RRCResume* does not include *dedicatedSIB1-Delivery* and
      3> if the active downlink BWP, which is indicated by the *firstActiveDownlinkBWP-Id* for the target SpCell of the MCG, has a common search space configured by *searchSpaceSIB1*:
         4> acquire the *SIB1* of the target SpCell of the MCG, as specified in 5.2.2.3.1 which is scheduled as specified in TS 38.213 [13];
         4> upon acquiring *SIB1,* perform the actions specified in section 5.2.2.4.2.
   2> the procedure ends.
   NOTE: The UE is only required to acquire broadcasted *SIB1* if the UE can acquire it without disrupting unicast data reception, i.e. the broadcast and unicast beams are quasi colocated.
1> the procedure ends.

### Further examples regarding security aspects using RRCResume message to handover to a new target cell

In the previous examples, the UE continued to use the keys associated with the initial target cell (Cell-A, the cell the UE attempts to resume in) even though it is handed over to a new target cell (Cell-B).

Optionally or alternatively, the UE can perform a horizontal key derivation based on the key it derived before transmitting the *RRCResumeRequest.*

The horizontal key derivation uses the current key (K_{gNB}/K_{eNB},K_{ng-eNB}/K_{NG-RAN}) as input when deriving the new key along with parameters associated with the new target cell (as specified in TS 33.501).

The algorithms to use in the new target cell (Cell-B) are the same as the algorithms used in Cell-A. If Cell-B wants to change the algorithms, it can do this at a later point by sending a RRCReconfiguration message to the UE.

In one example, the *RRCResume* message can be extended to include security configurations, e.g. NCC and/or security algorithms.

By including the NCC, the network can instruct the UE to either perform a horizontal key derivation (by using the same NCC value as the UE used before) or perform a vertical key derivation (by incrementing the NCC value one step). The concepts of horizontal and vertical key derivations are specified in TS 33.501.

### Full configuration handling

The full configuration handling in TS. 38.331 has to be updated to include the case where the resume procedure results in handover.Changes in 3GPP TS. 38.331 are as follows (with the changes being underlined):

### 5.3.5.11 Full configuration

The UE shall:
1> release/ clear all current dedicated radio configurations except the MCG C-RNTI and the security configurations associated with the master key;
   1. NOTE 1: Radio configuration is not just the resource configuration but includes other configurations like *MeasConfig.*
1>if the *spCellConfig* in the *masterCellGroup* includes the *reconfigurationWithSync* (handover or handover upon resume request):
   2> release/ clear all current common radio configurations;
1> use the default values specified in 9.2.x for timer T310, T311 and constant N310, N311;
   [...]

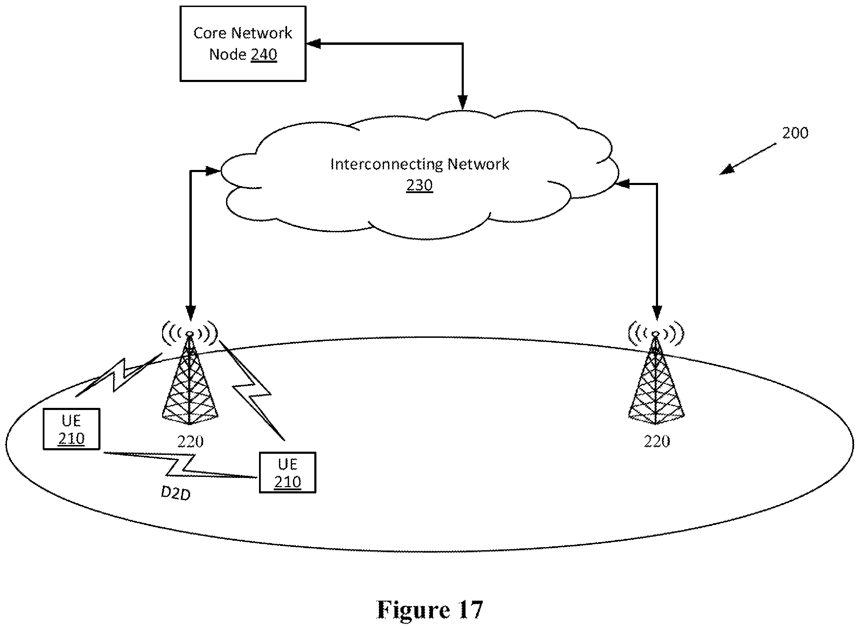

Figure 17 illustrates a wireless communication network 200 for wireless communications. Wireless communication network 200 includes wireless devices 210 (e.g., user equipments, UEs) and a plurality of network nodes 220 (e.g., eNBs, gNBs, base stations, etc.) connected to one or more core network nodes 240 via an interconnecting network 230. Wireless devices 210 within a coverage area may each be capable of communicating directly with network nodes 220 over a wireless interface. The UEs 210 are massive MIMO (M-MIMO) capable UEs, for example. The network node can be the serving network node of the M-MIMO UE or any network node with which the M-MIMO UE can establish or maintain a communication link and/or receive information (e.g. via broadcast channel). As such, the network node may comprise multiple antennas, distributed over a plurality of RRHs.

In certain embodiments, wireless devices 210 may also be capable of communicating with each other via device-to-device (D2D) communication. In certain embodiments, network nodes 220 may also be capable of communicating with each other, e.g. via an interface (e.g. X2 in LTE or other suitable interface).

As an example, wireless device 210 may communicate with network node 220 over a wireless interface. That is, wireless device 210 may transmit wireless signals and/or receive wireless signals from network node 220. The wireless signals may contain voice traffic, data traffic, control signals, and/or any other suitable information. In some embodiments, an area of wireless signal coverage associated with a network node 220 may be referred to as a cell.

In some embodiments wireless device 210 may be interchangeably referred to by the nonlimiting term user equipment (UE). Wireless device 210 can be any type of wireless device capable of at least M-MIMO communications with a network node or another UE over radio signals. Examples of such M-MIMO UEs are a sensor, modem, smart phone, machine type (MTC) device aka machine to machine (M2M) device, PDA, iPAD, Tablet, smart phone, laptop embedded equipped (LEE), laptop mounted equipment (LME), USB dongles etc.

In some embodiments, the "network node" can be any kind of network nodes. Examples of network ndoes are eNodeB, Node B, Base Station, wireless access point (AP), base station controller, radio network controller, relay, donor node controlling relay, base transceiver station (BTS), transmission points, transmission nodes, Remote Radio Unit (RRU), Remote Radio Head (RRH), nodes in distributed antenna system (DAS), core network node, Mobility Management Entity (MME) etc.

In certain embodiments, network nodes 220 may interface with a radio network controller (not shown). The radio network controller may control network nodes 220 and may provide certain radio resource management functions, mobility management functions, and/or other suitable functions. In certain embodiments, the functions of the radio network controller may be included in the network node 220. The radio network controller may interface with the core network node 240. In certain embodiments, the radio network controller may interface with the core network node 240 via the interconnecting network 230.

The interconnecting network 230 may refer to any interconnecting system capable of transmitting audio, video, signals, data, messages, or any combination of the preceding. The interconnecting network 230 may include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

In some embodiments, the core network node 240 may manage the establishment of communication sessions and various other functionalities for wireless devices 210. Examples of core network node 340 may include MSC, MME, SGW, PGW, O&M, OSS, SON, positioning node (e.g. E-SMLC), MDT node, etc. Wireless devices 210 may exchange certain signals with the core network node 240 using the non-access stratum layer. In non-access stratum signaling, signals between wireless devices 310 and the core network node 240 may be transparently passed through the radio access network. In certain embodiments, network nodes 220 may interface with one or more other network nodes over an internode interface. For example, network nodes 220 may interface each other over an X2 interface.

Although Figure 17 illustrates a particular arrangement of network 200, the present disclosure contemplates that the various embodiments described herein may be applied to a variety of networks having any suitable configuration. For example, network 200 may include any suitable number of wireless devices 210 and network nodes 220, as well as any additional elements suitable to support communication between wireless devices or between a wireless device and another communication device (such as a landline telephone). The embodiments may be implemented in any appropriate type of telecommunication system supporting any suitable communication standards and using any suitable components, and are applicable to any radio access technology (RAT) or multi-RAT systems in which the wireless device receives and/or transmits signals (e.g., data).

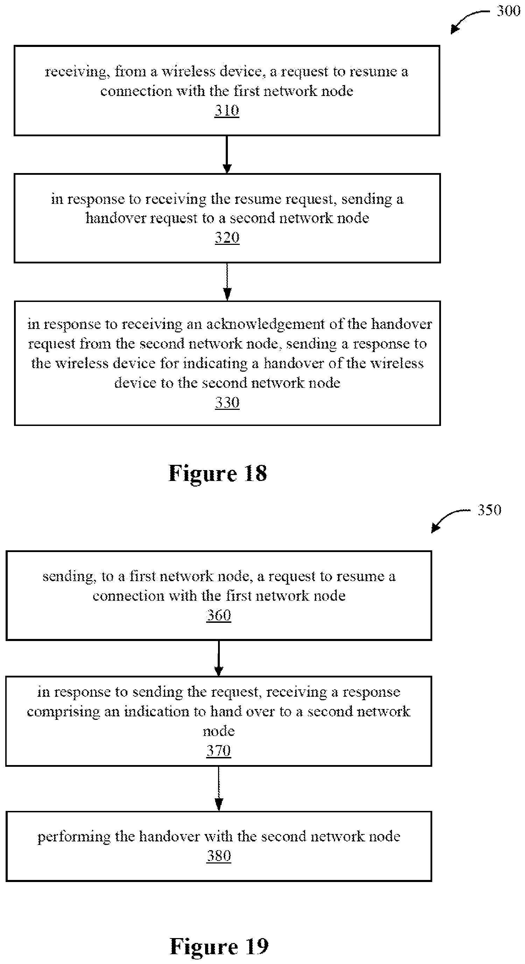

Although terminology from 3GPP LTE (or E-UTRAN) has been used in this disclosure to exemplify the embodiments and describe both the serving and victim network nodes, this should not be seen as limiting the scope of the disclosure to only the aforementioned system. Other wireless systems, including WCDMA, UTRA FDD, UTRA TDD, and GSM/GERAN/EDGE, may also benefit from exploiting the ideas covered within this disclosure. Furthermore, embodiments of this disclosure can apply to scenarios in which the serving and victim nodes employ differing radio access technologies (RATs).
Now, turning to Figure 18, a flow chart of a method 300 for resuming a connection in a communication network, such as 200, will be described. The method 300 can be performed by a first network node, such as 220. A second node can be another network node 220. The first and second network nodes could be an eNB or agNB or a combination thereof. The wireless device could be the UE 210. Method 300 comprises:
Step 310: receiving, from a wireless device, a request to resume a connection with the first network node.
Step 320: in response to receiving the resume request, sending a handover request to a second network node.
Step 330: in response to receiving an acknowledgement of the handover request from the second network node, sending a response to the wireless device for indicating a handover of the wireless device to the second network node.

For example, the request to resume can be a *RRCConnectionResumeRequest,* a *RRCResumeRequest* or a *RRCResumeRequest1.*

For example, the response sent to the wireless device can be a *RRCresume* message, a *RRCConnectionResume message, a RRCConnectionReconfiguration* message, or a *RRCReconfiguration.*

The response sent to the wireless device can be also a *MobilityFromNRCommand* comprising a *RRCConnectionReconfiguration* or a *MobilityFromEUTRACommand* comprising a *RRCReconfiguration.*

The *RRCResume* message can comprises a *reconfigurationWithSync* information element, for indicating the handover to the second network node. The *RRCConnectionResume* message comprises a *mobilityControlInfo* information element for indicating the handover to the second network node.

Those resume messages may also comprise security configurations.

In some embodiments, the response may comprise reconfiguration indication for the wireless device to apply when connecting to the second network node.

In some embodiments, the method may further determine that the connection cannot be resumed, based on measurements either performed by the first network node or received in measurement reports by the first network node or based on configurations, for example.

In some embodiments, determining that the connection cannot be resumed may comprise determining that the first network node is congested.

In some embodiments, the first network node may retrieve context information of the wireless device from the last network node serving the wireless device.

In some embodiments, the first network node and the second network node may be in the same radio access network. In some other embodiments, the first network node and the second network node may be in different radio access networks.

Figure 19 illustrates a flow chart of a method 350 for resuming a connection in a communication network, such as 200. The method 350 can be performed by a wireless device, such as UE 210. The first network node can be 220, and the second network node could be another network node 220. The first and second network nodes could be an eNB or a gNB or a combination thereof.

Method 350 comprises:
Step 360: sending, to a first network node, a request to resume a connection with the first network node.
Step 370: in response to sending the request, receiving a response comprising an indication to hand over to a second network node.
Step 380: performing the handover with the second network node.

In some embodiments, the request to resume may be a *RRCConnectionResumeRequest,* a *RRCResumeRequest* or a *RRCResumeRequest1.*

The response received from the first network node may be a *RRCresume* message, a *RRCConnectionResume message, a RRCConnectionReconfiguration* message, or a *RRCReconfiguration.*

The response can be also a *MobilityFromNRCommand* comprising a *RRCConnectionReconfiguration* or a *MobilityFromEUTRACommand* comprising a *RRCReconfiguration.*

The *RRCResume* message can comprises a *reconfigurationWithSync* information element, for indicating the handover to the second network node. The *RRCConnectionResume* message comprises a *mobilityControlInfo* information element for indicating the handover to the second network node. These resume messages may also comprise security configurations.

In some embodiments, the response may comprise configuration indications for the wireless device to apply when connecting to the second network node.

In some embodiments, the wireless device may apply the indicated configurations to be used in the second network node and send a message to the second network node, the message being a RRCResumeComplete message or RRCConnectionReconfigurationComplete, for example.

In some embodiments, the wireless device may stop a resume failure detection timer.

In some embodiments, the wireless device may update a security key based on the received resume message.

In some embodiments, the first network node and the second network node may in a same radio access network. In some other examples, the first network node and the second network node may be in different radio access networks.

In some embodiments, the method may further perform a random access with the second network node for connecting to the second network node.

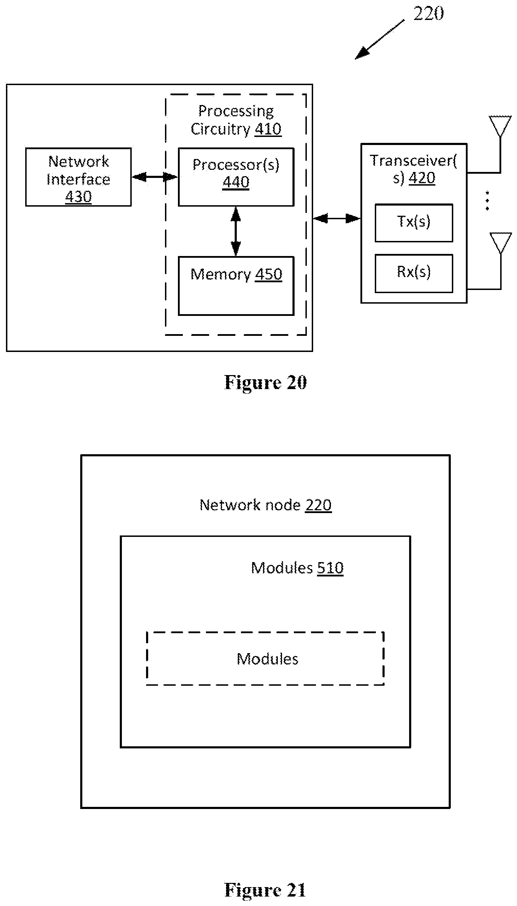

Figure 20 is a block diagram of an exemplary radio network node 220, in accordance with certain embodiments. Radio network node 220 may include one or transceivers 420 with multiple antennas, processor 440, memory 450, and network interface 430. In some embodiments, the transceiver facilitates transmitting wireless signals to and receiving wireless signals from wireless device 210 (e.g., via transmitter(s) (Tx), receiver(s) (Rx), and antennas). The processor 440 executes instructions to provide some or all of the functionalities described above as being provided by a radio network node 220, the memory stores the instructions executed by the processor. In some embodiments, the processor 440 and the memory 450 form processing circuitry 410. The network interface communicates signals to backend network components, such as a gateway, switch, router, Internet, Public Switched Telephone Network (PSTN), core network nodes or radio network controllers, etc.

The processor may include any suitable combination of hardware to execute instructions and manipulate data to perform some or all of the described functions of radio network node 220, such as those described above, e.g. method 300 and the related embodiments. In some embodiments, the processor may include, for example, one or more computers, one or more central processing units (CPUs), one or more microprocessors, one or more application specific integrated circuits (ASICs), one or more field programmable gate arrays (FPGAs) and/or other logic.

The memory is generally operable to store instructions, such as a computer program, software, an application including one or more of logic, rules, algorithms, code, tables, etc. and/or other instructions capable of being executed by a processor. Examples of memory include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, the network interface is communicatively coupled to the processor and may refer to any suitable device operable to receive input for radio network node 220, send output from radio network node 220, perform suitable processing of the input or output or both, communicate to other devices, or any combination of the preceding. The network interface may include appropriate hardware (e.g., port, modem, network interface card, etc.) and software, including protocol conversion and data processing capabilities, to communicate through a network.

Other embodiments of radio network node 220 may include additional components beyond those shown in Figure 20 that may be responsible for providing certain aspects of the radio network node's functionalities, including any of the functionalities described above and/or any additional functionalities (including any functionality necessary to support the solutions described above). The various different types of network nodes may include components having the same physical hardware but configured (e.g., via programming) to support different radio access technologies, or may represent partly or entirely different physical components.

Processors, interfaces, and memory similar to those described with respect to Figure 20 may be included in other network nodes (such as core network node 230). Other network nodes may optionally include or not include a wireless interface (such as the transceiver described in Figure 20).

In some embodiments, the network node 220 may comprise a series of modules 510 (see Figure 21) configured to implement the functionalities of the network node 220 described above. Referring to Figure 21, in some embodiments, the network node 220 may comprise a receiving module configured to perform at least step 310 of Figure 18. The network node 220 may comprise a sending module configured to perform steps 320 and 330 of Figure 18.

It will be appreciated that the various modules may be implemented as combination of hardware and/or software, for instance, the processor, memory and transceiver(s) of radio network node 220 shown in Figure 20. Some embodiments may also include additional modules to support additional and/or optional functionalities.

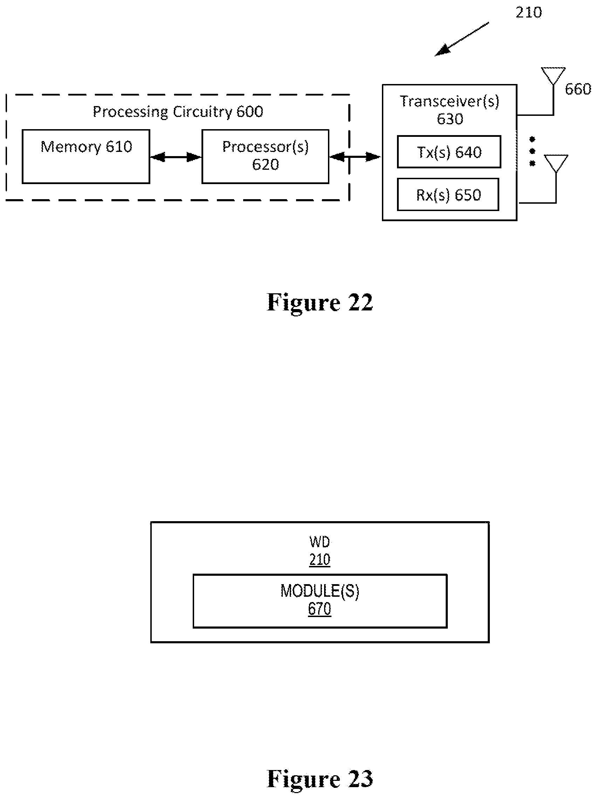

Figure 22 is a schematic block diagram of the wireless device 210 according to some embodiments of the present disclosure. As illustrated, the wireless device 210 includes circuitry 600 comprising one or more processors 620 (e.g., Central Processing Units (CPUs), Application Specific Integrated Circuits (ASICs), Field Programmable Gate Arrays (FPGAs), and/or the like) and memory 610. The wireless device 210 also includes one or more transceivers 630 each including one or more transmitter 640 and one or more receivers 650 coupled to one or more antennas 660. In some embodiments, the functionality of the wireless device 210 described above may be fully or partially implemented in software that is, e.g., stored in the memory 610 and executed by the processor(s) 620. For example, the processor 620 is configured to perform method 350 of Figure 19.

In some embodiments, a computer program including instructions which, when executed by the at least one processor 620, causes the at least one processor 620 to carry out the functionality of the wireless device 210 according to any of the embodiments described herein is provided (e.g. method 350 of Figure 19). In some embodiments, a carrier containing the aforementioned computer program product is provided. The carrier is one of an electronic signal, an optical signal, a radio signal, or a computer readable storage medium (e.g., a non-transitory computer readable medium such as memory).

Figure 23 is a schematic block diagram of the wireless device 210 according to some other embodiments of the present disclosure. The wireless device 210 includes one or more modules 670, each of which is implemented in software. The module(s) 670 provide the functionality of the wireless device 210 described herein. The module(s) 670 may comprise, for example, a sending module operable to perform steps 360 of Figure 19. The module(s) 670 may further comprise a receiving module operable to perform step 370 of Figure 19. The module(s) 670 may further comprise a handover module operable to perform step 380 of Figure 19.

Embodiments may also be practiced in distributed computing environments where tasks are performed by remote-processing devices that are linked through a communications network.

For example, it should be noted that the network 200 may have some function being virtualized. In the present context, virtualizing means creating virtual versions of apparatuses or devices which may include virtualizing hardware platforms, storage devices and networking resources. As used herein, virtualization can be applied to a network node 220 (e.g., a virtualized base station or a virtualized radio access node) or to a device 210 (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments hosted by one or more of hardware nodes. Further, in embodiments in which the virtual node is not a radio access node or does not require radio connectivity (e.g., a core network node), then the network node may be entirely virtualized.

Some embodiments may be represented as a non-transitory software product stored in a machine-readable medium (also referred to as a computer-readable medium, a processor-readable medium, or a computer usable medium having a computer readable program code embodied therein). The machine-readable medium may be any suitable tangible medium including a magnetic, optical, or electrical storage medium including a diskette, compact disk read only memory (CD-ROM), digital versatile disc read only memory (DVD-ROM) memory device (volatile or non-volatile), or similar storage mechanism. The machine-readable medium may contain various sets of instructions, code sequences, configuration information, or other data, which, when executed, cause a processor to perform steps in a method according to one or more of the described embodiments. Those of ordinary skill in the art will appreciate that other instructions and operations necessary to implement the described embodiments may also be stored on the machine-readable medium. Software running from the machine-readable medium may interface with circuitry to perform the described tasks.

## Claims

1. A method performed by a first network node (220), the method comprising:
- receiving (310), from a wireless device (210), a request to resume a connection with the first network node (220);
- sending (320) a handover request to a second network node (220) in response to receiving the resume request;
- in response to receiving an acknowledgement for the handover request, from the second network node (220), sending (330) a response to the wireless device (210) for indicating a handover of the wireless device (210) to the second network node (220).

2. The method of claim 1, further comprising:
retrieving context information of the wireless device from a previous network node (220) that served the wireless device (210); and/or
determining that the connection cannot be resumed in response to receiving the resume request, wherein, optionally, determining that the connection cannot be resumed (i) is based on one of performing measurements, receiving measurement reports on the first network node (220) and configurations or (ii) comprises determining that the first network node (220) is congested.

3. A method performed by a wireless device (210), the method comprising:
- sending (360), to a first network node (220), a request to resume a connection with the first network node (220);
- in response to sending the request, receiving (370), from the first network node (220), a response comprising an indication to hand over to a second network node (220); and
- performing (380) the handover with the second network node (220).

4. The method of any one of claims 1 to 3, wherein the request to resume is one of RRCConnectionResumeRequest, RRCResumeRequest and RRCResumeRequest1.

5. The method of any one of claims 1 to 4, wherein the response is one of a RRCConnectionReconfiguration message, a RRCReconfiguration message, a RRCResume message and a RRCConnectionResume message, wherein, optionally, the RRCResume message comprises a reconfigurationWithSync information element, which is used for indicating the handover to the second network node and wherein the RRCConnectionResume message comprises a mobilityControlInfo information element for indicating the handover to the second network node (220).

6. The method of any one of claims 1 to 4, wherein the response is one of a MobilityFromNRCommand comprising a RRCConnectionReconfiguration and a MobilityFromEUTRACommand comprising a RRCReconfiguration.

7. The method of claim 5, wherein the RRCresume message comprises security configurations.

8. The method of any one of claims 1 to 7, wherein the response comprises configuration indications for the wireless device (210) to apply when connecting to the second network node (220).

9. The method of claim 8 when dependent on claim 3, further comprising applying the indicated configurations to be used in the second network node (220) and sending a message to the second network node (220), wherein, optionally, the message is one of a RRCReconfigurationComplete message and a RRCConnectionReconfigurationComplete message.

10. The method of any one of claims 3 to 9, further comprising stopping a resume failure detection timer.

11. The method of claim 5 when dependent on claim 3, further comprising updating a security key based on the received RRCResume message.

12. The method of claim 3 or any one of claims 4 to 11 when dependent on claim 3, wherein the first network node (220) and the second network node (220) are in different radio access networks and the method further comprises performing a random access with the second network node (220) for connecting to the second network node (220).

13. A computer program product comprising a non-transitory computer readable storage medium having computer readable program code recorded thereon, which when the computer readable program code is executed by a processor of a wireless device (210), causes the processor to perform the method of claim 3 or the method of any one of claims 4 to 12 when dependent on claim 3, or when the computer readable program code is executed by a processor of a first network node (220), causes the processor to perform the method of claims 1 or 2, or the method of any one of claims 4 to 8 and 12 when dependent on claim 1.

14. A wireless device (210) configured to resume a connection in a communication network, the wireless device (210) comprising a communication interface (630), a processor (620) and a memory, the memory containing instructions that, when executed, cause the processor (620) to perform the method of claim 3 or the method of any one of claims 4 to 12 when dependent on claim 3.

15. A first network node (220) configured to resume a connection for a wireless device (210) in a communication network, the first network node (220) comprising a communication interface (420), a processor (440) and a memory (450), the memory (450) containing instructions that, when executed, cause the processor (440) to perform the method of claim 1 or claim 2, or the method of any one of claims 4 to 8 and 12 when dependent on claim 1.

## Patentansprüche

1. Verfahren, das von einem ersten Netzwerkknoten (220) durchgeführt wird, wobei das Verfahren umfasst:
- Empfangen (310) einer Anforderung von einer drahtlosen Vorrichtung (210) zum Wiederaufnehmen einer Verbindung mit dem ersten Knoten (220);
- Senden (320) einer Weiterreichungsanforderung an einen zweiten Knoten (220) in Reaktion auf den Empfang der Wiederaufnahmeanforderung;
- Senden (330) einer Antwort an die drahtlose Vorrichtung (210) zum Anzeigen einer Weiterreichung der drahtlosen Vorrichtung (210) an den zweiten Netzwerkknoten (220) in Reaktion auf den Empfang einer Bestätigung für die Weiterreichungsanforderung vom zweiten Netzwerkknoten (220).

2. Verfahren nach Anspruch 1, ferner umfassend:
Abrufen von Kontextinformationen der drahtlosen Vorrichtung von einem vorherigen Netzwerkknoten (220), der die drahtlose Vorrichtung (210) bediente; und/oder
Bestimmen, dass die Verbindung nicht wiederaufgenommen werden kann, in Reaktion auf den Empfang der Wiederaufnahmeanforderung, wobei optional das Bestimmen, dass die Verbindung nicht wiederaufgenommen werden kann, (i) auf einem von Durchführen von Messungen, Empfangen von Messberichten am ersten Netzwerkknoten (220) und Konfigurationen basiert oder (ii) ein Bestimmen umfasst, dass der erste Netzwerkknoten (220) überlastet ist.

3. Verfahren, das von einer drahtlosen Vorrichtung (210) durchgeführt wird, wobei das Verfahren umfasst:
- Senden (360) einer Anforderung zum Wiederaufnehmen einer Verbindung mit einem ersten Netzwerknoten (220) an den ersten Knoten (220);
- Empfangen (370) einer Antwort vom ersten Netzwerkknoten (220), die eine Anzeige zur Weiterreichung an einen zweiten Netzwerkknoten (220) umfasst, in Reaktion auf das Senden der Anforderung; und
- Durchführen (380) der Weiterreichung mit dem zweiten Netzwerkknoten (220).

4. Verfahren nach einem der Ansprüche 1 bis 3, wobei die Wiederaufnahmeanforderung eine von RRCConnectionResumeRequest, RRCResumeRequest und RRCResumeRequest1 ist.

5. Verfahren nach einem der Ansprüche 1 bis 4, wobei die Antwort eine von einer RRCConnectionReconfiguration-Nachricht, einer RRCReconfiguration-Nachricht, einer RRCResume-Nachricht und einer RRCConnectionResume-Nachricht ist, wobei optional die RRCResume-Nachricht ein reconfigurationWithSync-Informationselement umfasst, das zum Anzeigen der Weiterreichung an den zweiten Netzwerkknoten verwendet wird, und wobei die RRCConnectionResume-Nachricht ein mobilityControllnfo-Informationselement zum Anzeigen der Weiterreichung an den zweiten Netzwerkknoten (220) umfasst.

6. Verfahren nach einem der Ansprüche 1 bis 4, wobei die Antwort einer von einem MobilityFromNRCommand, der eine RRCConnectionReconfiguration umfasst, und einem MobilityFromEUTRACommand ist, der eine RRCReconfiguration umfasst.

7. Verfahren nach Anspruch 5, wobei die RRCresume-Nachricht Sicherheitskonfigurationen umfasst.

8. Verfahren nach einem der Ansprüche 1 bis 7, wobei die Antwort Konfigurationsanzeigen für die drahtlose Vorrichtung (210) zur Anwendung bei Verbindung mit dem zweiten Netzwerkknoten (220) umfasst.

9. Verfahren nach Anspruch 8, wenn abhängig von Anspruch 3, ferner umfassend ein Anwenden der angezeigten Konfigurationen, die im zweiten Netzwerkknoten (220) verwendet werden sollen, und Senden einer Nachricht an den zweiten Netzwerkknoten (220), wobei optional die Nachricht eine von einer RRCReconfigurationComplete-Nachricht und einer RRCConnectionReconfigurationComplete-Nachricht ist.

10. Verfahren nach einem der Ansprüche 3 bis 9, ferner umfassend ein Stoppen eines Wiederaufnahmefehlererkennungszeitgebers.

11. Verfahren nach Anspruch 5, wenn von Anspruch 3 abhängig, ferner umfassend ein Aktualisieren eines Sicherheitsschlüssels basierend auf der empfangenen RRCResume-Nachricht.

12. Verfahren nach Anspruch 3 oder einem der Ansprüche 4 bis 11, wenn von Anspruch 3 abhängig, wobei der erste Netzwerkknoten (220) und der zweite Netzwerkknoten (220) sich in verschiedenen Funkzugangsnetzwerken befinden und das Verfahren ferner ein Durchführen eines Direktzugriffs mit dem zweiten Netzwerkknoten (220) zur Verbindung mit dem zweiten Netzwerkknoten (220) umfasst.

13. Computerprogrammprodukt, umfassend ein nichttransitorisches computerlesbares Speichermedium mit darauf aufgezeichnetem computerlesbarem Programmcode, der bei Ausführung des computerlesbaren Programmcodes durch einen Prozessor einer drahtlosen Vorrichtung (210) den Prozessor zum Durchführen des Verfahrens nach Anspruch 3 oder des Verfahrens nach einem der Ansprüche 4 bis 12, wenn von Anspruch 3 abhängig, veranlasst oder bei Ausführung des computerlesbaren Programmcodes durch einen Prozessor eines ersten Netzwerkknotens (220) den Prozessor zum Durchführen des Verfahrens nach Anspruch 1 oder 2 oder des Verfahrens nach einem der Ansprüche 4 bis 8 und 12, wenn abhängig von Anspruch 1, veranlasst.

14. Drahtlose Vorrichtung (210), die zum Wiederaufnehmen einer Verbindung in einem Kommunikationsnetzwerk konfiguriert ist, wobei die drahtlose Vorrichtung (210) eine Kommunikationsschnittstelle (630), einen Prozessor (620) und einen Speicher umfasst, wobei der Speicher Anweisungen enthält, die bei Ausführung den Prozessor (620) zum Durchführen des Verfahrens nach Anspruch 3 oder des Verfahrens nach einem der Ansprüche 4 bis 12, wenn von Anspruch 3 abhängig, veranlassen.

15. Erster Netzwerkknoten (220), der zum Wiederaufnehmen einer Verbindung für eine drahtlose Vorrichtung (210) in einem Kommunikationsnetzwerk konfiguriert ist, wobei der erste Netzwerkknoten (220) eine Kommunikationsschnittstelle (420), einen Prozessor (440) und einen Speicher (450) umfasst, wobei der Speicher (450) Anweisungen enthält, die bei Ausführung den Prozessor (440) zum Durchführen des Verfahrens nach Anspruch 1 oder 2 oder des Verfahrens nach einem der Ansprüche 4 bis 8 und 12, wenn von Anspruch 1 abhängig, veranlassen.

## Revendications

1. Procédé réalisé par un premier noeud de réseau (220), le procédé comprenant :
- la réception (310), depuis un dispositif sans fil (210), d'une demande de reprise d'une connexion avec le premier noeud de réseau (220) ;
- l'envoi (320) d'une demande de transfert intercellulaire à un deuxième noeud de réseau (220) en réponse à la réception de la demande de reprise ;
- en réponse à la réception d'un accusé de réception de la demande de transfert intercellulaire, depuis le deuxième noeud de réseau (220), l'envoi (330) d'une réponse au dispositif sans fil (210) pour indiquer un transfert intercellulaire du dispositif sans fil (210) au deuxième noeud de réseau (220).

2. Procédé selon la revendication 1, comprenant en outre :
la récupération d'informations de contexte du dispositif sans fil depuis un noeud de réseau (220) précédent ayant desservi le dispositif sans fil (210) ; et/ou
la détermination que la connexion ne peut pas être reprise en réponse à la réception de la demande de reprise, dans lequel, facultativement, la détermination que la connexion ne peut pas être reprise (i) est basée sur l'une parmi la réalisation de mesures, la réception de rapports de mesure sur le premier noeud de réseau (220) et des configurations ou (ii) comprend la détermination que le premier noeud de réseau (220) est encombré.

3. Procédé réalisé par un dispositif sans fil (210), le procédé comprenant :
- l'envoi (360), à un premier noeud de réseau (220), d'une demande de reprise d'une connexion avec le premier noeud de réseau (220) ;
- en réponse à l'envoi de la demande, la réception (370), depuis le premier noeud de réseau (220), d'une réponse comprenant une indication de transfert intercellulaire à un deuxième noeud de réseau (220) ; et
- la réalisation (380) du transfert intercellulaire au deuxième noeud de réseau (220).

4. Procédé selon l'une quelconque des revendications 1 à 3, dans lequel la demande de reprise est l'une parmi RRCConnectionResumeRequest, RRCResumeRequest et RRCResumeRequest1.

5. Procédé selon l'une quelconque des revendications 1 à 4, dans lequel la réponse est l'un parmi un message RRCConnectionReconfiguration, un message RRCReconfiguration, un message RRCResume et un message RRCConnectionResume, dans lequel, facultativement, le message RRCResume comprend un élément d'information reconfigurationWithSync, qui est utilisé pour indiquer le transfert intercellulaire au deuxième noeud de réseau et dans lequel le message RRCConnectionResume comprend un élément d'information mobilityControlInfo pour indiquer le transfert intercellulaire au deuxième noeud de réseau (220) .

6. Procédé selon l'une quelconque des revendications 1 à 4, dans lequel la réponse est l'une parmi une MobilityFromNRCommand comprenant une RRCConnectionReconfiguration et une MobilityFromEUTRACommand comprenant une RRCReconfiguration.

7. Procédé selon la revendication 5, dans lequel le message RRCresume comprend des configurations de sécurité.

8. Procédé selon l'une quelconque des revendications 1 à 7, dans lequel la réponse comprend des indications de configuration pour le dispositif sans fil (210) à appliquer lors de la connexion au deuxième noeud de réseau (220).

9. Procédé selon la revendication 8 dépendant de la revendication 3, comprenant en outre l'application des configurations indiquées à utiliser dans le deuxième noeud de réseau (220) et l'envoi d'un message au deuxième noeud de réseau (220), dans lequel, facultativement, le message est l'un parmi un message RRCReconfigurationComplete et un message RRCConnectionReconfigurationComplete.

10. Procédé selon l'une quelconque des revendications 3 à 9, comprenant en outre l'arrêt d'une temporisation de détection d'échec de reprise.

11. Procédé selon la revendication 5 dépendant de la revendication 3, comprenant en outre la mise à jour d'une clé de sécurité sur la base du message RRCResume reçu.

12. Procédé selon la revendication 3 ou l'une quelconque des revendications 4 à 11 dépendant de la revendication 3, dans lequel le premier noeud de réseau (220) et le deuxième noeud de réseau (220) sont dans des réseaux d'accès radio différents et le procédé comprend en outre la réalisation d'un accès aléatoire avec le deuxième noeud de réseau (220) pour la connexion au deuxième noeud de réseau (220) .

13. Produit programme informatique comprenant un support de stockage lisible par ordinateur non transitoire sur lequel est enregistré un code de programme lisible par ordinateur qui, lorsque le code de programme lisible par ordinateur est exécuté par un processeur d'un dispositif sans fil (210), amène le processeur à réaliser le procédé selon la revendication 3 ou le procédé selon l'une quelconque des revendications 4 à 12 dépendant de la revendication 3, ou, lorsque le code de programme lisible par ordinateur est exécuté par un processeur d'un premier noeud de réseau (220), amène le processeur à réaliser le procédé selon la revendication 1 ou 2 ou le procédé selon l'une quelconque des revendications 4 à 8 et 12 dépendant de la revendication 1.

14. Dispositif sans fil (210) configuré pour reprendre une connexion dans un réseau de communication, le dispositif sans fil (210) comprenant une interface de communication (630), un processeur (620) et une mémoire, la mémoire contenant des instructions qui, lorsqu'elles sont exécutées, amènent le processeur (620) à réaliser le procédé selon la revendication 3 ou le procédé selon l'une quelconque des revendications 4 à 12 dépendant de la revendication 3.

15. Premier noeud de réseau (220) configuré pour reprendre une connexion pour un dispositif sans fil (210) dans un réseau de communication, le premier noeud de réseau (220) comprenant une interface de communication (420), un processeur (440) et une mémoire (450), la mémoire (450) contenant des instructions qui, lorsqu'elles sont exécutées, amènent le processeur (440) à réaliser le procédé selon la revendication 1 ou 2 ou le procédé selon l'une quelconque des revendications 4 à 8 et 12 dépendant de la revendication 1.
